(19) Europäisches Patentamt / European Patent Office / Office européen des brevets

(11) **EP 2 847 370 B1**

(12) **EUROPEAN PATENT SPECIFICATION**

(45) Date of publication and mention of the grant of the patent:
**14.09.2016 Bulletin 2016/37**

(21) Application number: **12813809.6**

(22) Date of filing: **18.12.2012**

(51) Int Cl.:
***D01F 6/60*** *(2006.01)* ***D01F 6/80*** *(2006.01)*
***D02G 3/04*** *(2006.01)* ***D06M 13/292*** *(2006.01)*
***D02G 3/02*** *(2006.01)* ***F16L 11/00*** *(2006.01)*
***F41H 5/04*** *(2006.01)*

(86) International application number:
**PCT/EP2012/075957**

(87) International publication number:
**WO 2013/079729 (06.06.2013 Gazette 2013/23)**

(54) **TEXTILE REINFORCEMENT COMPRISING CONTINUOUS ARAMID YARN**

TEXTILVERSTÄRKUNG MIT ENDLOSARAMIDGARN

RENFORT TEXTILE COMPRENANT DES FILS D'ARAMIDE CONTINUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2012 EP 12167307**

(43) Date of publication of application:
**18.03.2015 Bulletin 2015/12**

(73) Proprietor: **Teijin Aramid B.V.**
**6824 BM Arnhem (NL)**

(72) Inventors:
- **KWINT, Huibert Cornelis**
  **NL-3903 WP Veenendaal (NL)**
- **HUISKAMP, Jasper Jorrit**
  **NL-3527 XG Utrecht (NL)**
- **VAN CAMPEN, Jan**
  **NL-6921 GP Duiven (NL)**

(74) Representative: **CPW GmbH**
**Kasinostraße 19-21**
**42103 Wuppertal (DE)**

(56) References cited:
**EP-A1- 1 808 526**

- **ANONYMOUS: "Processing finish for amorphous aramid staple", RESEARCH DISCLOSURE, MASON PUBLICATIONS, HAMPSHIRE, GB, vol. 219, no. 1, 1 July 1982 (1982-07-01), XP007108435, ISSN: 0374-4353**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 847 370 B1

## Description

The invention pertains to a textile reinforcement comprising continuous aramid yarn, in particular to a knitted, spiraled, braided, linear, or woven textile reinforcement. The invention also pertains to a hose, tube, (flexible) pipe, optical fiber cable, power cable, fiber-reinforced composite and ballistic resistant article, comprising said textile reinforcement.

Aramid yarn is well known in the art for its high strength. It is therefore very suitable for use in textile reinforcement applications, e.g., in the applications mentioned above. However, due to its specific properties, there are problems associated with the use of aramid in these applications.

One problem is that during the manufacture of the textile reinforcement, e.g., during knitting, spiraling, braiding, weaving, or linear aligning, fibrillation may occur, which may lead to the formation of fluff on the textile reinforcement, resulting in irregular product quality. There is need for providing a textile reinforcement in which this problem is solved. A further problem, which is particularly relevant for structures wherein fibers are interlocking to form loops and knots, e.g., knitted, spiraled, braided, or woven textile reinforcements, more in particular knitted, braided, or woven textile reinforcements, is that there is room for improvement of the strength of the construction. This can be shown, e.g., by a need for an improved loop breaking tenacity of the yarn, in particular at elevated temperatures. The breaking tenacity of manufactured textile fibers in loop or knot configurations is a reinforcement value, which predicts the strength of the reinforcement construction.
A further problem, which is particularly relevant for linear textile reinforcements such as tapes made from parallel yarn, are the spreading properties of the multifilament yarn. A multifilament yarn which shows good spreading properties allows the manufacture of tapes which have a relatively high width to thickness ratio.

In the art, efforts have been made to improve the processability of aramid yarn.

It has been disclosed in US 5,478,648 to use mixtures of alkyl phosphate esters and ethoxylated alkyl phosphate esters as a finish for aramid yarn. These finishes, however, when present on textile reinforcements of tubes or hoses have a serious drawback in that they lead to lower loop breaking tenacity and increased fibrillation during processing, which in turn leads to the formation of fluff on the final product. Surprisingly it has been found that the use of a specific finish on the continuous yarn used in the textile reinforcement of the invention yields a textile reinforcement which does not suffer from the problems indicated above. More specifically, the formation of fluff on the textile reinforcement is reduced, the strength of the construction, as is evidenced by the loop breaking tenacity is improved, and the spreading properties of the yarn are also improved.

The present invention therefore pertains to a textile reinforcement comprising aramid yarn, which yarn is continuous yarn and provided with a finish comprising mono- or dialkyl phosphate ester or a mixture thereof, which finish is free of compounds with alkoxy groups; and wherein the mono- or dialkyl phosphate ester finish has the formula:

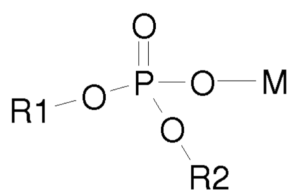

wherein R1 is branched or straight-chain $C_1$-$C_{15}$ alkyl, R2 is H, Li, Na, K or $NH_4$, or branched or straight-chain $C_1$-$C_{15}$ alkyl, and M is Li, Na, K or $NH_4$.

In one embodiment, the invention pertains to a textile reinforcement which is a knitted, braided, or woven textile reinforcement. In one embodiment, the invention pertains to a textile reinforcement which is a spiraled, stranded or linear textile reinforcement.
The finish permits the yarn to exhibit excellent processing properties during converting steps such as twisting, braiding, knitting, stranding and winding. The finish as presently used prevents fully or at least very substantial fibrillation of the aramid yarn surface during ring-twisting, double-twisting, braiding and knitting and therefore fibrillation levels are extremely low as compared to standard oil-based aramid finishes based on fatty acid esters, such as coconut oil and polyglycol. This results in a textile reinforcement showing improved quality, less fluff, and improved continuity. Surprisingly, a distinct advantage of the lower interfilament cohesion has been observed in stranded and linear reinforcements such as known in the MRG- and OFC-market (reinforced cooling hoses and optical fiber cables). Good coverage of the optical fiber core or rubber hose during stranding is feasible when the interfilament bundle cohesion is low. Another feature of the present invention is that the aramid yarn with an alkyl phosphate finish is particularly suitable for the manufacturing of uni-directional aramid tape, such as disclosed in US8,031,996. Due to the lower interfilament cohesion, easy yarn spread-ability is achieved during matrix application and a good resin wetting and impregnation of the yarn

bundle is achieved with a thermoplastic or curable matrix material, such as disclosed in US8,031,996. The strength of the textile reinforcement, as is evidenced by the loop breaking strength, is also much improved.

Within the context of the present specification, textile reinforcements are reinforcement materials comprising fabric, wherein the term "fabric" has the common meaning as defined in the handbook Textile Terms and Definitions (ed. The Textile Institute, page 88) and means any manufactured assembly of fibers and/or yarns that has substantial surface area in relation to its thickness and sufficient mechanical strength to give the assembly inherent cohesion. Fabrics may be structures wherein the yarns are arranged in interlocking fashion, e.g., in braided, woven, or knitted structures. Fabrics may also be structures wherein the yarns are arranged in non-interlocking structures, e.g., in spiraling or linear arrangements.

Textile reinforcements derive their reinforcing properties from the strength of the yarn in the length direction. The continuous aramid yarn is used to reinforce the structure against stresses such as pressure or load in the length-direction of the aramid yarn Therefore, the textile reinforcements of the present invention are based on continuous yarn. As is part of the common general knowledge of the skilled person, a continuous yarn is a yarn of long continuous length comprising multiple continuous filaments. Continuous yarn is suitable for direct use in the production of textiles, whereby the yarn remains a multifilament yarn with continuous length filaments after subsequent converting steps such as twisting and braiding. Aramid yarn is conventionally made by providing a solution of aramid in a solvent such as sulfuric acid to a spinneret, which forms an aramid yarn, after a coagulation step with water, a washing step, and a stretching step. This process is often indicated as solution spinning.

In contrast, staple fiber is a short fiber of standardized length, typically 40-60mm. It is formed by cutting continuous yarn into pieces of predetermined length. Stable fiber can be used as such, e.g., as filling. However, it can also be converted into a yarn by a non-solvent spinning process, comparable to the spinning of wool. The thus formed yarn is not a continuous yarn with filaments of continuous length. As it is built up from short pieces of fiber, it does not have sufficient strength in the length direction for reinforcement applications. It is therefore not used in textile reinforcements, but in other textile applications, in particular for its fire-resistant or puncture-resistant properties, e.g., for fire-protective clothing (gloves and suits).

In addition to the low tensile strength of yarn spun from staple fiber, yarn spun from staple fiber cannot be spread, because of the interlocked short fibers. Therefore, the surprisingly good spreading properties of the continuous yarn provided with the specified finish used in the present invention do not apply at all to yarn spun from staple fiber with the same alkyl phosphate finishes.

Incidentally, it is noted that JP 10212664 discloses a spinning finish for polyolefin, polyacrylate or polyester staple fiber containing both short and long chain alkyl phosphate esters with 18 to 22 carbon atoms and 8 to 12 carbon atoms, respectively. This reference is directed to staple fiber, which has no relevancy to the present invention. Additionally, due to the long chain alkyl group, such finishes cannot be used to make an aqueous solution or dispersion without using large amounts of emulsifiers, surfactants and/or stabilizers.

US 2002/153504 discloses mixed phosphate esters of long chain alkyl groups (16 to 22 carbon atoms) and polyhydroxyalkyl groups (with at least three hydroxy groups). These finishes are also applied to staple fiber, which is not relevant for the present invention.

Research Disclosure 219, no. 1, 1 July 1982, Processing finish for aramid staple yarn, describes m-aramid staple fibers provided with a finish which is a mixture of mono-and diesters of alkyl phosphate. This reference does not describe how the finish is applied onto the staple fibers.

EP1808526 describes short aramid fibers provided with a finish which is a mixture of mono- and diesters of alkyl phosphate. The finish is applied onto dry aramid yarn, which is subsequently crimped and cut. The reference indicates that the short fibers have good converting properties, bundling properties, and antistatic properties and low adhesion. Subjecting short fibers to a drawing process over rubber and metallic rollers is a very different process than spinning an aramid solution to form filaments, which are further processed to form a continuous yarn. The disclosure of these three documents is therefore not relevant to the present invention.

Apart from the improved processing properties, additional advantages of the alkyl phosphate esters of this invention in textile reinforcement applications over fatty acid esters are the excellent anti-static charging characteristics occurring already at very low dosing levels (<0.4 wt% based on the weight of the aramid), and the increased loop breaking tenacity for twisted yarns especially at elevated temperatures that are applicable to cooling hoses, in a broad tpm-range (Z60-Z200 at 150 °C). The term Z60-Z200 means 60 to 200 tpm (yarn twist in turns per meter) in the Z-direction (depending on the direction of the twist, the yarn will be known as S-twist or Z-twist).

Due to the excellent anti-static characteristics of the herein described finish it is possible to apply low application amounts, for instance in the range of 0.05 to 0.95 wt%, based on the weight of the aramid. In another embodiment 0.10 to 0.50 wt% of the finish is used.

In the alkyl phosphate ester used in the present invention, R1 is branched or straight-chain $C_1$-$C_{15}$ alkyl and R2 is H, Li, Na, K, or $NH_4$, or branched or straight-chain $C_1$-$C_{15}$ alkyl.

To increase the solubility in water, it is preferred for R1 and/or R2 to be independently selected from branched or straight-

chain $C_3$-$C_{15}$ alkyl groups, more preferably branched or straight-chain $C_4$-$C_{14}$, $C_6$-$C_{14}$, $C_8$-$C_{14}$, $C_6$-$C_{12}$, $C_8$-$C_{12}$ or $C_8$-$C_{10}$ alkyl groups. Alkyl phosphate esters wherein R1 and/or R2 are selected $C_4$, $C_6$, $C_8$, $C_{10}$ or $C_{12}$ alkyl are very useful. These alkyl groups may be branched or straight-chain, but straight-chain alkyl groups are usually preferred. Both groups R1 and R2 may be alkyl. It is also possible that R1 is an alkyl group and R2 is H, an alkali metal or ammonium. It is very useful to apply mixtures of mono- and dialkyl phosphate esters. A particularly useful alkyl phosphate ester has straight-chain $C_6$ or $C_{12}$ alkyl groups. This can be the mono- $C_6$ or $C_{12}$ alkyl ester or the dialkyl $C_6$ or $C_{12}$ ester, or a combination of straight-chain mono- and di-$C_6$ or $C_{12}$ alkyl groups. The use of the straight chain $C_{12}$ alkyl mono-ester, the straight chain $C_{12}$ alkyl di-ester, and combinations thereof are preferred. M is then preferably an alkali metal, most preferably K (potassium) to give a mixture of dipotassium mono-dodecyl phosphate ester and potassium didodecyl phosphate ester, i.e. for $C_{12}$ alkyl:

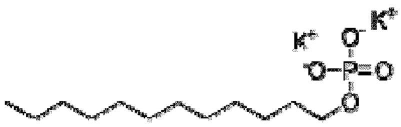 and 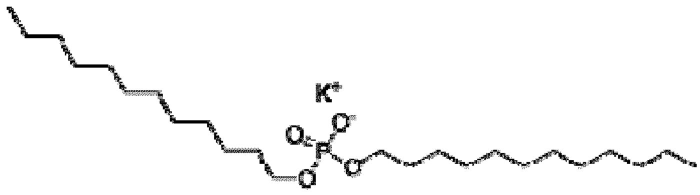

In all phosphate esters used in this invention M is Li, Na, K or $NH_4$, wherein Li, Na and K are alkali metals. K is most preferred as group M.

It should further be understood that alkyl alcohols with 6 to 15 carbon atoms are sometimes commercially available as mixtures having minor amounts of lower and higher alkyl alcohols. Such starting materials can be used for making the alkyl phosphate esters, which then also consist of a mixture of alkyl phosphate esters with higher and shorter alkyl group. However, alkyl phosphate esters with higher than C15 alkyl groups are not claimed.

In one embodiment, the finish present on the aramid yarn is free of alkyl-phosphate esters wherein the alkyl group has more than 15 carbon atoms. Within the context of the present specification this means that of alkyl-phosphate esters wherein the alkyl group has more than 15 carbon atoms are not present in the finish or on the yarn in an amount of more than 1 wt.%, based on dry solids weight. More preferably, alkyl-phosphate esters wherein the alkyl group has more than 15 carbon atoms compounds are not present in the finish or on the yarn in detectable amounts.

The finish used in the present invention is preferably derived from an aqueous solution or dispersion comprising the above mono- or dialkyl phosphate ester, which solution is free (less than 1 wt% based on dry solids weight, preferably undetectable) from alkoxy-containing stabilizers, emulsifiers, surfactants and the like. It is further preferred if other stabilizers, emulsifiers, surfactants and the like are only present in low amounts, and preferably not present or substantially not present at all. This is particularly important in order to prevent fibril formation during the braiding, knitting, spiraling or weaving, such as circular weaving. This requires using phosphate esters with alkyl groups not having more than 15 carbon atoms. Phosphate esters with higher alkyl groups cannot be used in aqueous solutions or dispersions without using such aiding compounds, or without applying extremely low concentrations and/or high working temperatures. The finish further does not contain compounds with alkyl ethers, such as methoxylated or ethoxylated phosphate esters, which alkyl ethers lead to lower loop breaking tenacity and increased fibrillation during processing.

The mono-alkyl phosphate ester can be (partially, up to about 30 wt%) present as its dimer, the dialkyl pyrophosphate ester with the formula:

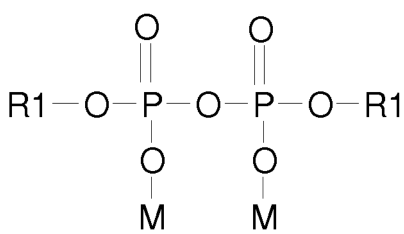

wherein R1 and M have the previously given meanings.

The finish may further contain 0-20 wt% (more preferably 0-10 wt%) of the trialkyl phosphate ester of the formula:

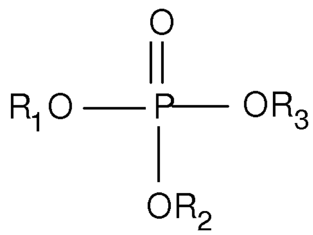

wherein $R_1$, $R_2$ and $R_3$ are independently branched or straight-chain $C_1$-$C_{15}$ alkyl groups. Preferably $R_3$ is the same as $R_1$ and/or $R_2$, and most preferred all groups $R_1$, $R_2$ and $R_3$ are the same. Preferred groups $R_1$, $R_2$ and $R_3$ are those as given above for the preferred embodiments of R1.

A very useful composition, for instance, is a mixture of 30-70 wt% mono-alkyl ester of phosphoric acid, 25-65 wt% dialkyl ester of phosphoric acid, 0-30 wt% dialkyl ester of pyrophosphoric acid, and 0-10 wt% trialkyl ester of phosphoric acid (to a total of 100 wt%), with the alkylesters being as described above. Examples of such compositions are for instance commercially available products such as Lurol A-45 (Goulston), Synthesin ARA® (Boehme), Leomin PN® (Clariant), Stantex ARA ® (Pulcra Chemicals) and Lakeland PA800K® (Lakeland). Products LDP80 and LDP161 from Lakeland have also proven to be useful. These products have been analyzed using $^{31}P$-NMR and the corresponding composition (the mixture of mono-, di-, tri- and pyrophosphate ester) has been calculated and given in Table 1.

Table 1. Composition in percentage by weight (obtained from $^{31}P$-NMR data)

| Product name | Supplier | Alkyl groups* | Composition wt% | | | |
|---|---|---|---|---|---|---|
| | | | mono# | di# | tri# | pyro# |
| Lurol A45 | Goulston | hexyl (C6) | 45 | 54 | 1 | 0 |
| LDP161 | Lakeland | 2-ethylhexyl (C8) | 66 | 30 | 4 | 0 |
| LDP80 | Lakeland | decyl (C10) | 60 | 36 | 4 | 0 |
| Leomin PN | Clariant | lauryl (C12) | 37 | 56 | 0 | 7 |
| Synthesin ARA | Boehme | lauryl (C12) | 37 | 47 | 0 | 16 |
| Stantex ARA | Pulcra | lauryl (C12) | 38 | 47 | 0 | 15 |

*all alkyl groups of the phosphate esters are the same and are as indicated in this column.
#mono, di, tri, and pyro stand for mono-alkyl ester of phosphoric acid, dialkyl ester of phosphoric acid, trialkyl ester of phosphoric acid, and dialkyl ester of pyrophosphoric acid, respectively.

The finish present on the aramid yarn is free of compounds with alkoxy-groups. Within the context of the present specification this means that compounds with alkoxy-groups are not present in the finish or on the yarn in an amount of more than 1 wt.%, based on dry solids weight. More preferably, compounds with alkoxy-groups are not present in the finish or on the yarn in detectable amounts.

In one embodiment, the finish comprises less than 10 wt.% of alkyl ethers, such as methoxylated or ethoxylated phosphate esters. It has been found that the presence of alkyl ethers detrimentally affects the processing of the yarn and the properties of the resulting yarn. It is preferred for the finish to comprise less than 5 wt.% of alkyl ethers, more specifically less than 3 wt.%, still more specifically less than 2 wt.%. In one embodiment the finish further does not contain compounds with alkyl ethers. Within the context of the present specification this means that alkyl ethers are not present in the finish or on the yarn in an amount of more than 1 wt.%, based on dry solids weight. More preferably, alkyl ethers are not present in detectable amounts.

The textile is braided, knitted, spiraled, converted or (for instance circular) woven in a manner as known in the art and comprises the finished aramid yarn. The aramid yarn only includes continuous multifilament yarns, thus not staple yarn, sliver, pulp, stretch-broken or short cut yarn. The spin finish can be applied directly after the spinning of the filaments or during the after-treatment. Application of the finish can be done by means of known methods and equipment, such as dipping, slit applicator, lick roller or spraying. The yarn is commonly brought in contact with the finish in a bath or by kiss rolls or slit applicators. Typical yarn speeds are 10 to 700 m/min, more preferably 25-500 m/min. The textile preferably only contains the finished continuous aramid yarn, but may in addition also contain other non-aramid yarns.

Aramid yarn, preferably is para-aramid yarn such as poly(p-phenylene terephthalamide), which is known as PPTA and commercially available as Twaron® or Kevlar®, or poly(p-phenyleneterephthalamide) containing 3,4'-diaminodiphenylether units (to give a yarn commercially available as Technora®), or aramids containing 5(6)-amino-2-(p-aminophenyl)benzimidazole (DAPBI) units, to give e.g. a yarn known under the name Rusar®. In Technora® and Rusar® the 3,4'-diaminodiphenylether and DAPBI monomers replace part of the para-phenylenediamine (PPD) monomers during the polymerization of the PPD and TDC (terephthaloyldichloride) monomers.

The aramid yarns of the present invention are notable for excellent mechanical properties, such as high breaking strength and initial modulus and low breaking extensions, and also for the abovementioned favorable applications and further processing properties. The cross section of the individual filaments of the yarns of the present invention can be optional, for example triangular or flat, or in particular elliptical or circular.

When using prior art finishes, such as the mixed ethoxylated finishes of US 5,478,648, the aramid yarns possess high interfilament cohesion. It was always believed that high interfilament cohesion is essential for use of the yarn in the production of textile sheet materials by intermingling, twisting, braiding, weaving or folding, and because one can expect more fibrillation for yarns with low interfilament cohesion, finishes were selected for their ability to increase the interfilament cohesion. Contrary to this belief of using finishes that increase the interfilament cohesion, the finish of the aramid yarns of the present invention typically leads to lower interfilament cohesion and at first glance such yarns may seem inappropriate for use in applications applying braiding, knitting, weaving and spiraling. Surprisingly, although the present finish leads to lower interfilament cohesion, an improvement with regard to fibril forming was nevertheless observed. The yarns as treated with the presently claimed finish, which does not comprise (i.e. less than 1 wt%, preferably 0 wt%) alkoxylated compounds for increasing the interfilament cohesion, appeared to be almost completely devoid of any fibrillation, whereas the antistatic properties are still as good as those of US 5,478,648.

It was also found that the abrasion of the present spin finishes as compared to the finish disclosed e.g. in US 5,478,648, for example in the course of twisting and winding, is very low and the abraded-off material is in the form of dust, which is readily removable and does not form a tacky build-up on the deflecting elements. Compared with conventional systems, an improvement of about 86-98% was observed.

During production of Twaron® high-modulus yarn under high yarn tension and high drying temperatures fibrillation of the yarn was significantly suppressed when provided with a finish of 0.4 wt% Leomin PN® (a mixture of dipotassium mono-dodecyl phosphate ester and potassium didodecyl phosphate ester) as compared to standard fatty acid ester based finishes. The high-modulus yarn was dried at 170°C for 1.06-2.65 s, at a tension of 203 mN/tex (2.03 cN/dtex), subsequently dried at 190°C for 1.06-2.65 s, at a tension of 193 mN/tex (1.93 cN/dtex) and subsequently dried at 250°C-400°C for 1.06-1.33 s, at a tension of 158-203 mN/tex (1.58-2.03cN/dtex) and then cooled down by applying water with a kiss-roll at a tension of 118 mN/tex (1.18 cN/dtex).

Alkyl phosphate finishes are considered very suitable for enabling high modulus Twaron® yarn production with moduli in the range of 100-150GPa. The high-temperature resistance of alkyl-phosphate finishes and the suppression of fibrillation at elevated temperatures as compared to standard fatty acid ester based and ethoxylated and propoxylated based finishes enables high drying temperatures up to 400ºC.

A field of application is the use of twisted or untwisted finished aramid yarn in the textiles of this invention for reinforcement of mechanical rubber goods such as industrial and cooling hoses, as well as flexible pipes. Fiber reinforced industrial hoses and flexible pipes, such as flexible flowlines, are frequently used in the oil and gas industry, while typical examples of fiber reinforced hoses in automotive applications are cooling hoses, fuel hoses, and turbocharger hoses. Reinforced industrial hoses that require aramid are hydraulic hoses operating in high-voltage areas, for example, or paint-spraying hoses that can withstand chemical solvents, or lay-flat hoses which need to be folded and unfolded many times without sacrificing performance.

Aramid fiber is typically used in hydraulic umbilicals to reinforce the high pressure thermoplastic hoses which are a component of hydraulic umbilicals used in offshore oil & gas production. In addition aramid reinforcements are frequently used in flexible pipes for the offshore oil & gas industry as an Anti Bird Caging (ABC Tape/Fabric) protection. The ABC protection prevents outward buckling of the inner steel layers. The aramid reinforcement typically compromise parallel yarns embedded in a polymeric matrix as a tape or as a narrow ribbon/fabric of twisted yarns. Other linear aramid reinforced plastics or composites, such as uni-directionals, rods and bead wires, do benefit from the improved processing properties during production due to use of alkyl phosphate finishes. Low fibrillation prevents build-up of fibrils and fluffs on production machines during converting aramid yarn into composite products. Aramid fibre-reinforced plastic (AFRP) (also called aramid fibre-reinforced polymer) is a composite material made of a polymer matrix reinforced with aramid fibres. The polymer is usually an epoxy, vinylester or polyester thermosetting resin. AFRPs can be used in the aerospace, automotive, marine, and construction industries. AFRP can also be used for reinforcing concrete structures. AFRP concrete reinforcing elements provide lighter, easier to assemble, and more durable structures that are free of the deterioration caused by corrosion of steel.

Another field of application is the use of high-modulus aramid yarn in the textiles of this invention for linear or spiraled reinforcement of optical fiber cables, and power cables. Optical fiber cables are typically reinforced by stranding the aramid reinforcement around the optical core with a specified lay length. The high strength and modulus of aramid fibers prevent the optical glass fibers in the cable to be subjected to external forces resulting in breakage of the glass fibers.

Usually the optical glass fibers are located in thin thermoplastic hollow tubes in the cable (so-called central and loose tube constructions) or a thermoplastic layer is extruded on the optical fiber (tight-buffered construction). Generally the inner cable is completely covered by the reinforcing aramid fibers, especially for the tight-buffered construction. Another important characteristic of aramid fibers is their excellent heat resistance. During the production of the optical fiber cable, a thermoplastic jacket is extruded around the inner cable to protect against weathering. The aramid fibers located in between the jacket and the tubes form an insulation layer and prevent melt fusion of both parts during extrusion. As a result of melt fusion the transmission of the optical signals can be disturbed. Melt fusion will also make the connectorization of the cable impossible in case of a tight-buffered cable. To prevent melt fusion in cases where it is not wanted, more reinforcing material as insulator in this cable is used than is desired from the viewpoint of cable strength or cable modulus.

Experimental:

Loop Breaking Tenacity (LBT) and Loop Breaking Strength (LBS)

The loop breaking tenacity and strength were measured by applying the method described in ASTM D3217-01, modified for aramid yarn. The standard test method for breaking tenacity of manufactured textile fibers in loop or knot configurations was applied using the following procedure which has been modified for aramid yarns:

Aramid yarn is twisted prior to measuring because this is most representative for the final application in tubes and hoses. The yarn is twisted prior to this determination, whereby the amount of twist to be inserted is calculated with the equation:

$$YT(tpm) = \frac{(1055 \pm 50)}{\sqrt{LD}}$$

wherein YT = yarn twist in turns per meter (tpm) and LD = linear density in tex The twisted yarn is pre-dried on the twisting bobbin for 3 hours in a ventilated oven at 45 ± 5 °C and subsequently conditioned for at least 16 hours in a standard test atmosphere (temperature 20 ± 2 °C; relative humidity 65 ± 2%). The test is performed at 150 °C, whereby a special oven tube is placed between the clamps in order to achieve this temperature during testing. Pre-heating of the aramid yarn for 30 seconds at 150 °C is required.

The number of determinations per laboratory sample is at least n = 5 (clamp breaks not included). The loop breaking tenacity is given in mN/tex and the loop breaking strength in N.

The gage length in the tensile testing machine measured between the two effective clamping points is 500 ± 1 mm. Rate of extension of the tensile testing machine is 250 ± 10 mm/min (the usual rate is 50% of gage length per minute).

The measuring range for the force is set to obtain a maximum force exerted during the test which is between 10 and 90% of that range. Air pressure for pneumatic clamps is set so that no slippage or specimen break occurs in the clamp. Approx. 50 m of yarn from the outside layer of the bobbin are removed and discarded before test samples are taken. Test samples are taken at irregular intervals from at least 5 m from material on the central part of a twisting bobbin and from 5 cm from the flanges. Bobbin with material is placed in a holder so that the material can be drawn off tangentially. Each sample consists of two pieces of yarn taken from one twisted bobbin. Both ends of one piece are mounted in the jaws of the upper clamp, the length of the loop being approximately equal to half the gage length, and the clamp is closed. In mounting the loops in the clamps any change in twist of the pieces of yarn is avoided.

Fibrillation Index (friction pin test)

The fibrillation index (FI) is determined by exposing aramid yarn to excessive friction on a static glass rod on six tension levels. The fibrils that are formed are collected on a filter by using vacuum and weighed. The fibrillation index is calculated based on the total amount of fibrils generated during trials at these six different tensions. Typically, six spools are loaded simultaneously and ran at 6 different pre-tensions, whereby every spool is ran at all 6 different pre-tensions (in total 6 runs on 6 different tension settings of 2000 meter, in total 72 kilometers, resulting in an averaged amount of fibrillation in mg per pre-tension). The fibrillation index (FI, arbitrary units) is a measure for the total amount of fibrillation generated during the friction pin test at given test conditions and represents the area under the friction pin test response curve, in which the average fibrillation (mg) is plotted versus the set pre-tension F1 (at 6 points: 6, 9, 12, 15, 18, 21 cN).

*Test conditions*

Test length = 2000 m per tension setting
Speed = 200 ± 0.2 meter/min
Pre-tension (F1) = 6, 9, 12, 15, 18, 21 cN (each ±1 cN)
Wrap angle = 130°
Friction pin = glass
Pin diameter = 4 mm

*Measured variables*

Pre-tension F1 (cN)
After-tension F2 (cN)
Fibrillations (mg)
Temperature set at 20±2 °C (room temperature)
Air Relative Humidity (%) set at 65±2 % RH

The test equipment is schematically depicted in Fig. 1 wherein:

1 is pink ceramic disc tensioner (Rapal DD30)
2 is bypass roller (Barmag, ceramic coating)
3 is friction pin (glass, pin diameter = 4 mm)
4 is tension meter (F1 pre-tension)
5 is tension meter (F2 after-tension)
6 is infra-red fray counter (in-line Fraytec II counter)
7 is vacuum tube (connected to vacuum cleaner)
8 is filter holder (30 mm diameter, mesh size 65 μm)

<u>Cutting test for determining filament cohesion</u>

A untwisted yarn sample 60cm long is vertically suspended over a table. Its top end is secured in a clamp. To the free, lower end of the sample there is attached such a weight that the tension in the yarn sample is 1 cN/dtex. Subsequently, the untwisted yarn sample is cut at 40cm below the point of suspension. Next, of the remaining suspended upper half of the sample the length and the greatest width are measured of the possibly flared, newly formed end at the point where the yarn was cut trough. The extent to which the yarn has opened vertically and horizontally as a result of its having been cut through under the above-mentioned tension is indicative of the degree of cohesion of the filaments. The test is repeated three times and both the vertical width as well as the horizontal opened length in cm is being reported including the spread value. The maximum vertical opened length value possible in this test set-up is 40cm.

The invention is illustrated by the following non-restrictive examples.

<u>Example 1</u>

A finish stock solution based on Leomin PN® (10 wt%) was made by diluting Leomin PN® (75 wt%; ex Clariant) into a 10% solution in warm (60 °C) demi-water. To obtain the final spin finish solution (1.5 wt%) the Leomin PN® stock solution was further diluted in warm demi-water (40 °C) and stirred for 15 minutes, after which it was ready to apply onto the yarn. Unfinished Twaron® multifilament yarn with a linear density of 1716dtex and filament count 1000 (from one single PPTA batch of 19.4% and a final moisture content of 6% directly after spinning) was treated in-line with Leomin PN® finish at a dosing level of 0.2-0.4 and 0.6 wt% Leomin PN® and a spinning speed of 350 m/min by using a slit applicator. The reference sample was finished subsequently under the exact same spinning conditions with Leomin OR® finish (consisting of fatty acid polyglycol esters, ex Clariant) at 0.6 and 0.8 wt%. The loop breaking strength was measured at one twist level (Z80) at 150 °C, and the results of the measurements are given in Table 2.

Table 2. Loop Breaking Strength (LBS)

| Z80 twist, Twaron® 1716dtex/f1000 | Leomin OR® average value of 0.6 and 0.8 wt% (prior art) | Leomin PN® average value of 0.2, 0.4, and 0.6 wt% (invention) | Tenacity increase (%) |
|---|---|---|---|
| LBS (N) at 150 °C | 207 | 244 | 18 |

Table 3 shows the fibrillation results with the fibrillation index (FI). The friction pin test was executed with untwisted Twaron® yarn.

Table 3. Friction pin test results (fibrillation) with untwisted Twaron® yarn

| Twaron® 1716dtex/f1000 | Leomin OR® average value of 0.6 and 0.8 wt% (prior art) | Leomin PN® average value of 0.2, 0.4, and 0.6 wt% (invention) | Fibrillation decrease (%) |
|---|---|---|---|
| FI | 400 | 13 | 97% |

Table 4 shows the filament cohesion (cutting test) of untwisted yarn with three finish levels of Leomin PN and two finish levels of Leomin OR®.

Table 4. Filament cohesion results (cutting test results)

| Finish | | Length (vertical) | | Width (horizontal) | |
|---|---|---|---|---|---|
| | | average | spread | average | spread |
| | wt% | cm | cm | cm | cm |
| Leomin PN® | 0,2 | 40,0* | 0,0 | 3,4 | 1,9 |
| | 0,4 | 40,0* | 0,0 | 1,9 | 1,1 |
| | 0,6 | 40,0* | 0,0 | 3,0 | 1,7 |
| Leomin OR® | 0,6 | 8,3 | 1,5 | 0,4 | 0,2 |
| | 0,8 | 6,0 | 1,0 | 0,4 | 0,2 |
| *maximum vertical length value possible in test set-up | | | | | |

Example 2

A finish stock solution based on Synthesin ARA® (10 wt%) was made by diluting Synthesin ARA® (56 wt%; ex Boehme) into a 10% solution in warm (40 °C) demi-water. To obtain the final spin finish solution (1.5 wt%) the Synthesin ARA® stock solution was further diluted in warm demi-water (40 °C) and stirred for 15 minutes, after which it was ready to apply onto the yarn. Unfinished Twaron® multifilament yarn 1700 dtex and filament count 1000 was produced in a single spinning trial (from one single PPTA batch of 18.95% and a final moisture content of 10% directly after spinning) and treated in-line with Synthesin ARA® finish at a dosing level of 0.26 wt% Synthesin ARA® and a spinning speed of 350 m/min by using a slit applicator. The reference sample was finished subsequently under the exact same spinning conditions with Leomin OR® finish (consisting of fatty acid polyglycol esters, ex Clariant) at 0.55 wt%. The loop breaking tenacity was measured at different twist levels at 150 °C according to the above test, and the fibrillation was measured according to the above described friction pin test. In Table 5 the test results of Leomin OR® (prior art) and Synthesin ARA (invention) have been given as a function of Z-twist, and the relative increase of the invention over the prior art has been summarized. In all cases an increase in the absolute loop breaking tenacity value was observed.

Table 5. Loop Breaking Tenacity of Leomin OR® (prior art) as function of twist

| Z-twist (tpm) | LD (dtex) | LBT 150 °C Leomin OR® (mN/tex) | LBT 150 °C Synthesin ARA® (mN/tex) | Relative increase of LBT value (%) |
|---|---|---|---|---|
| 60 | 1708 | 747 | 832 | 11 |
| 80 | 1710 | 725 | 827 | 14 |
| 100 | 1716 | 665 | 831 | 25 |

(continued)

| Z-twist (tpm) | LD (dtex) | LBT 150 °C Leomin OR® (mN/tex) | LBT 150 °C Synthesin ARA® (mN/tex) | Relative increase of LBT value (%) |
|---|---|---|---|---|
| 120 | 1720 | 674 | 817 | 21 |
| 140 | 1725 | 652 | 814 | 25 |
| 160 | 1732 | 685 | 794 | 16 |
| 180 | 1739 | 696 | 788 | 13 |
| 200 | 1748 | 698 | 776 | 11 |

In Table 6 the fibrillation results have been reported with the fibrillation index (FI). The friction pin test has been executed with untwisted Twaron® yarn.

Table 6 Friction pin test results (fibrillation index)

| Twaron® 1700dtex /f1000 | Leomin OR® 0.55 wt% (prior art) | Synthesin ARA® 0.26 wt% (invention) | Relative decrease (%) |
|---|---|---|---|
| FI | 246 | 6 | 98% |

Example 3

A finish stock solution of Lurol A45® (3 wt%) was made and applied onto the yarn. Unfinished Twaron® multifilament yarn with a linear density of 1716dtex and filament count 1000 (from one single PPTA batch of 19.45% and a final moisture content of 6% directly after spinning) was treated in-line with Lurol A45® finish at a dosing level of 0.2-0.4 and 0.6 wt% Lurol A45® and a spinning speed of 400 m/min by using a slit applicator. The reference sample was finished subsequently under the exact same spinning conditions with Leomin OR® finish (consisting of fatty acid polyglycol esters, ex Clariant) at 0.8 wt%. The loop breaking strength was measured at one twist level (Z80) and 150°C (results given in Table 7).

Table 7. Loop Breaking Strength (LBS)

| Z80 twist, Twaron® 1716dtex/f1000 | Leomin OR® 0.8 wt% (prior art) | Lurol A45® average value of 0.2, 0.4, and 0.6 wt% (invention) | Tenacity increase (%) |
|---|---|---|---|
| LBS (N) at 150 °C | 209 | 233 | 11 |

In Table 8 the fibrillation results have been given with the fibrillation index (FI). The friction pin test has been executed with untwisted Twaron® yarn.

Table 8. Friction pin test results (fibrillation index)

| Twaron® 1716dtex /f1000 | Leomin OR® 0.8 wt% (prior art) | Lurol A45® average value of 0.2, 0.4, and 0.6 wt% (invention) | Fibrillation decrease (%) |
|---|---|---|---|
| FI | 244 | 9 | 96 |

Table 9 shows the filament cohesion of untwisted yarn with Lurol A45® and Leomin OR®.

Table 9. Filament cohesion results (cutting test results)

| Finish | | Length (vertical) | | Width (horizontal) | |
|---|---|---|---|---|---|
| | | average | spread | average | spread |
| | wt% | cm | cm | cm | cm |
| Lurol A45® | 0,2 | 34,7 | 5,0 | 1,2 | 0,8 |
| Leomin OR® | 0,8 | 7,8 | 1,0 | 0,5 | 0,2 |

Example 4

A finish stock solution of Lakeland LDP80® (2 wt%) was made and applied onto the yarn. Unfinished Twaron® multifilament yarn with a linear density of 1716dtex and filament count 1000 (from one single PPTA batch of 19.45% and a final moisture content of 6% directly after spinning) was treated in-line with Lakeland LDP80® finish at a dosing level of 0.2 and 0.4 wt% (based on LDP80) and a spinning speed of 400 m/min by using a slit applicator. The reference sample was finished subsequently under the exact same spinning conditions with Leomin OR® finish (consisting of fatty acid polyglycol esters, ex Clariant) at 0.8 wt%. The loop breaking strength was measured at one twist level (Z80) and 150°C and reported in Table 10.

Table 10. Loop Breaking Strength (LBS) at 150°C

| Z80 twist, Twaron® 1716dtex /f1000 | Leomin OR® 0.8 wt% (prior art) | Lakeland LDP80® average value of 0.2 and 0.4 wt% (invention) | Tenacity increase(%) |
|---|---|---|---|
| LBS (N) at 150 °C | 209 | 230 | 10 |

In Table 11 the fibrillation results have been given with the fibrillation index (FI). The friction pin test has been executed with untwisted Twaron® yarn.

Table 11. Friction pin test results (fibrillation index)

| Twaron® 1716 dtex/f1000 | Leomin OR® 0.8 wt% (prior art) | Lakeland LDP80® average value of 0.2 and 0.4 wt% (invention) | Fibrillation decrease (%) |
|---|---|---|---|
| FI | 244 | 35 | 86 |

Table 12 shows the filament cohesion of untwisted yarn with Lakeland LDP80 and Leomin OR®.

Table 12. Filament cohesion results (cutting test results)

| Finish | | Length (vertical) | | Width (horizontal) | |
|---|---|---|---|---|---|
| | | average | spread | average | spread |
| | wt% | cm | cm | cm | cm |
| Lakeland LDP80® | 0,2 | 20,0 | 11,3 | 0,9 | 0,5 |
| Leomin OR® | 0,8 | 7,8 | 1,0 | 0,5 | 0,2 |

Example 5

A finish stock solution of Lakeland LDP161® (2 wt%) was made and applied onto the yarn. Unfinished Twaron® multifilament yarn with a linear density of 1716dtex and filament count 1000 (from one single PPTA batch of 19.45% and a final moisture content of 6% directly after spinning) was treated in-line with Lakeland LDP161® finish at a dosing level of 0.2 and 0.4 wt% (based on LDP161) and a spinning speed of 400 m/min by using a slit applicator. The reference sample was finished subsequently under exactly the same spinning conditions with Leomin OR® finish (consisting of fatty acid polyglycol esters, ex Clariant). The loop breaking strength was measured at one twist level (Z80) and 150 °C and reported in Table 13.

Table 13. Loop Breaking Strength (LBS)

| Z80 twist, Twaron® 1716dtex/f1000 | Leomin OR® 0.8 wt% (prior art) | Lakeland LDP161® average value of 0.2 and 0.4 wt% (invention) | Tenacity increase (%) |
|---|---|---|---|
| LBS (N) at 150 °C | 209 | 242 | 16 |

In Table 14 the fibrillation results have been reported with the fibrillation index (FI). The friction pin test has been executed with untwisted Twaron® yarn.

Table 14. Friction pin test results (fibrillation index)

| Twaron® 1716dtex/f1000 | Leomin OR® 0.8 wt% (prior art) | Lakeland LDP161® average value of 0.2 and 0.4 wt% (invention) | Fibrillation decrease (%) |
|---|---|---|---|
| FI | 244 | 21 | 91 |

Table 15 shows the filament cohesion of untwisted yarn with Lakeland LDP161® and Leomin OR®.

Table 15. Filament cohesion results (cutting test results)

| Finish | | Length (vertical) | | Width (horizontal) | |
|---|---|---|---|---|---|
| | | average | spread | average | spread |
| | wt% | cm | cm | cm | cm |
| Lakeland LDP161® | 0,2 | 11,3 | 2,5 | 1,1 | 0,6 |
| Leomin OR® | 0,8 | 7,8 | 1,0 | 0,5 | 0,2 |

Example 6

A finish stock solution based on Stantex ARA® (10 wt%) was made by diluting Stantex ARA® (56 wt%; ex Pulcra) into a 10% solution in warm (40 °C) demi-water. To obtain the final spin finish solution (2.8 wt%) the Stantex ARA® stock solution was further diluted in warm demi-water (40 °C) and stirred for 15 minutes, after which it was ready to apply onto the yarn. High-modulus Twaron® D2200 multifilament yarn 1610 dtex and filament count 1000 was produced in a single spinning trial and treated in-line with Stantex ARA® finish at a dosing level of 0.30 and 0.4 wt% using a slit applicator. The reference sample was finished subsequently under the exact same spinning conditions with Breox 50A50® finish (consisting of random exthoxylated and propylated butanol, ex Ilco-Chemie, BASF) at 0.80 wt%. The fibrillation was measured according to the above described friction pin test. In Table 16 the fibrillation results have been reported for 0.3wt% Stantex ARA® finish with the fibrillation index (FI). The friction pin test has been executed with untwisted Twaron® yarn.

Table 16 Friction pin test results (fibrillation index)

| Twaron® 161 Odtex /f1000 | Breox 50A50 ® 0.8 wt% (prior art) | Stantex ARA® 0.3 wt% (invention) | Relative decrease (%) |
|---|---|---|---|
| FI | 95 | 4 | 96 |

In Table 17 the fibrillation results have been reported for 0.4wt% Stantex ARA® finish with the fibrillation index (FI). The friction pin test has been executed with untwisted Twaron® yarn.

Table 17 Friction pin test results (fibrillation index)

| Twaron® 1610dtex /f1000 | Breox 50A50 ® 0.8 wt% (prior art) | Stantex ARA® 0.4 wt% (invention) | Relative decrease (%) |
|---|---|---|---|
| FI | 95 | 4 | 96 |

## Claims

1. A textile reinforcement comprising aramid yarn, which yarn is continuous yarn and provided with a finish comprising mono- or dialkyl phosphate ester or a mixture thereof, which finish is free of compounds with alkoxy groups; and wherein the mono-or dialkyl phosphate ester has the formula:

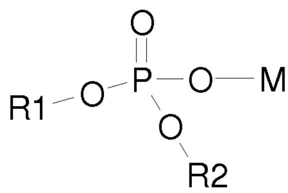

wherein R1 is branched or straight-chain $C_1$-$C_{15}$ alkyl, R2 is H, Li, Na, K or $NH_4$, or branched or straight-chain $C_1$-$C_{15}$ alkyl, and M is Li, Na, K or $NH_4$.

**2.** Textile reinforcement according to claim 1, which is a knitted, braided, or woven textile reinforcement.

**3.** Textile reinforcement according to claim 1, which is a spiraled, stranded or linear textile reinforcement.

**4.** Textile reinforcement according to any one of the preceding claims, wherein R1 is branched or straight-chain $C_4$-$C_{12}$ alkyl and R2 is H, Li, Na, K or $NH_4$ or branched or straight-chain $C_4$-$C_{12}$ alkyl.

**5.** Textile reinforcement according to any one of the preceding claims wherein R1 is selected from $C_4$, $C_6$, $C_8$, $C_{10}$, or $C_{12}$ alkyl and R2 is selected from H, Li, Na, K, $NH_4$, $C_4$ alkyl, $C_6$ alkyl, $C_8$ alkyl, $C_{10}$ alkyl, and $C_{12}$ alkyl.

**6.** Textile reinforcement according to any one of the preceding claims, wherein the alkyl groups are straight-chain alkyl groups.

**7.** Textile reinforcement according to any one of the preceding claims wherein M is K.

**8.** Textile reinforcement according to any one of the preceding claims wherein the finish further comprises up to 30 wt% dialkyl pyrophosphate ester of the formula:

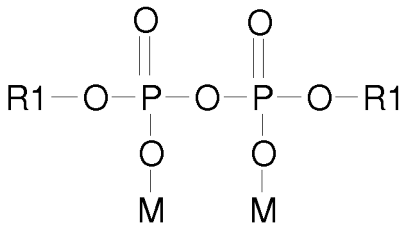

wherein R1 and M have the same meanings as in claim 1.

**9.** Textile reinforcement according to any one of the preceding claims wherein the finish further comprises up to 20 wt% trialkyl phosphate ester of the formula:

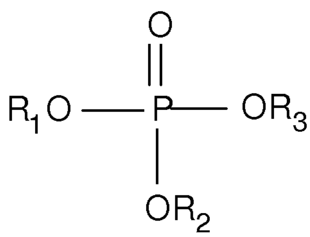

wherein $R_1$, $R_2$ and $R_3$ are independently branched or straight-chain $C_1$-$C_{15}$ alkyl groups.

**10.** Textile reinforcement according to any one of the preceding claims wherein the aramid is poly(p-phenylene terephthalamide) or poly(p-phenylene terephthalamide) containing 3,4'-diaminodiphenylether or 5(6)-amino-2-(p-aminophenyl)benzimidazole units.

11. Hose, tube, or flexible pipe comprising the textile reinforcement of any one of claims 1-10.

12. Optical fiber cable comprising the textile reinforcement of any one of claims 1 - 10.

13. Power cable comprising the textile reinforcement of any one of claims 1-10.

14. Fiber-reinforced plastic or composite comprising the textile reinforcement of any of claims 1-10.

15. Ballistic resistant article comprising the textile reinforcement of any of claims 1-10.

## Patentansprüche

1. Textile Verstärkung, umfassend ein Aramidgarn, welches ein Endlosgarn und mit einer Ausrüstung versehen ist, die Mono- oder Dialkylphosphatester oder eine Mischung davon umfasst, wobei die Ausrüstung frei von Verbindungen mit Alkoxygruppen ist, und wobei der Mono- oder Dialkylphosphatester die folgende Formel aufweist:

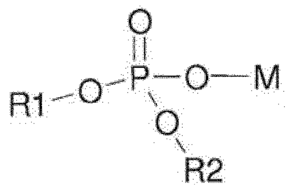

wobei R1 für ein verzweigtes oder geradkettiges $C_1$-$C_{15}$ Alkyl steht, R2 für H, Li, Na, K oder $NH_4$ oder ein verzweigtes oder geradkettiges $C_1$-$C_{15}$ Alkyl steht, und M für Li, Na, K oder $NH_4$ steht.

2. Textile Verstärkung nach Anspruch 1, die eine gestrickte, geflochtene oder gewebte Textilverstärkung ist.

3. Textile Verstärkung nach Anspruch 1, die eine spiralförmige, verseilte oder lineare Textilverstärkung ist.

4. Textile Verstärkung nach einem der vorhergehenden Ansprüche, wobei R1 für ein verzweigtes oder geradkettiges $C_4$-$C_{12}$ Alkyl steht und R2 für H, Li, Na, K oder $NH_4$ oder ein verzweigtes oder geradkettiges $C_4$-$C_{12}$ Alkyl steht.

5. Textile Verstärkung nach einem der vorhergehenden Ansprüche, wobei R1 aus $C_4$, $C_6$, $C_8$, $C_{10}$ oder $C_{12}$ Alkyl ausgewählt ist und R2 aus H, Li, Na, K, $NH_4$, $C_4$ Alkyl, $C_6$ Alkyl, $C_8$ Alkyl, $C_{10}$ Alkyl und $C_{12}$ Alkyl ausgewählt ist.

6. Textile Verstärkung nach einem der vorhergehenden Ansprüche, wobei die Alkylgruppen geradkettige Alkylgruppen sind.

7. Textile Verstärkung nach einem der vorhergehenden Ansprüche, wobei M für K steht.

8. Textile Verstärkung nach einem der vorhergehenden Ansprüche, wobei die Ausrüstung des Weiteren bis zu 30 Gew.-% Dialkylpyrophosphatester der folgenden Formel enthält:

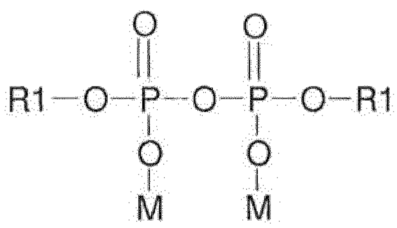

wobei R1 und M die gleichen Bedeutungen wie in Anspruch 1 haben.

9. Textile Verstärkung nach einem der vorhergehenden Ansprüche, wobei die Ausrüstung des Weiteren bis zu 20 Gew.-% Trialkylphosphatester der folgenden Formel enthält:

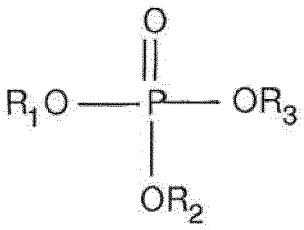

wobei $R_1$, $R_2$ und $R_3$ unabhängig voneinander verzweigte oder geradkettige $C_1$-$C_{15}$ Alkylgruppen sind.

**10.** Textile Verstärkung nach einem der vorhergehenden Ansprüche, wobei das Aramid Poly(p-phenylenterephthalamid) oder Poly(p-phenylenterephthalamid) ist, das 3,4'-Diaminodiphenylether oder 5(6)-Amino-2-(p-aminophenyl)benzimidazol-Einheiten enthält.

**11.** Schlauch, Rohr oder flexible Rohrleitung, umfassend die textile Verstärkung nach einem der Ansprüche 1-10.

**12.** Optisches Faserkabel, umfassend die textile Verstärkung nach einem der Ansprüche 1-10.

**13.** Stromkabel, umfassend die textile Verstärkung nach einem der Ansprüche 1-10.

**14.** Faserverstärkter Kunststoff oder Verbundwerkstoff, umfassend die textile Verstärkung nach einem der Ansprüche 1-10.

**15.** Ballistisch widerstandsfähiger Artikel, umfassend die textile Verstärkung nach einem der Ansprüche 1-10.

**Revendications**

**1.** Renfort textile comprenant un filé d'aramide, lequel filé est un filé continu, muni d'un apprêt comprenant un ester phosphate de monoalkyle ou de dialkyle ou un mélange de tels composés, lequel apprêt ne contient pas de composés comportant des groupes alcoxy, et dans lequel l'ester phosphate de monoalkyle ou de dialkyle a pour formule la suivante :

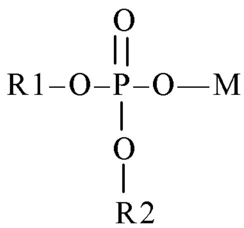

dans laquelle

- R1 représente un groupe alkyle en $C_1$-$C_{15}$ à chaîne linéaire ou ramifiée,
- R2 représente un atome d'hydrogène, un atome de lithium, de sodium ou de potassium ou un groupe ammonium, ou un groupe alkyle en $C_1$-$C_{15}$ à chaîne linéaire ou ramifiée,
- et M représente un atome de lithium, de sodium ou de potassium ou un groupe ammonium.

**2.** Renfort textile conforme à la revendication 1, qui est un renfort textile tricoté, tressé ou tissé.

**3.** Renfort textile conforme à la revendication 1, qui est un renfort textile spiralé, toronné ou linéaire.

**4.** Renfort textile conforme à l'une des revendications précédentes, dans lequel R1 représente un groupe alkyle en $C_4$-$C_{12}$ à chaîne linéaire ou ramifiée et R2 représente un atome d'hydrogène, un atome de lithium, de sodium ou de potassium ou un groupe ammonium, ou un groupe alkyle en $C_4$-$C_{12}$ à chaîne linéaire ou ramifiée.

5. Renfort textile conforme à l'une des revendications précédentes, dans lequel l'entité R1 est choisie parmi les groupes alkyle en $C_4$, $C_6$, $C_8$, $C_{10}$ ou $C_{12}$, et l'entité R2 est choisie parmi un atome d'hydrogène, les atomes de lithium, sodium et potassium et le groupe ammonium, et les groupes alkyle en $C_4$, alkyle en $C_6$, alkyle en $C_8$, alkyle en $C_{10}$ et alkyle en $C_{12}$.

6. Renfort textile conforme à l'une des revendications précédentes, dans lequel les groupes alkyle sont des groupes alkyle à chaîne linéaire.

7. Renfort textile conforme à l'une des revendications précédentes, dans lequel M représente un atome de potassium.

8. Renfort textile conforme à l'une des revendications précédentes, dans lequel l'apprêt comprend en outre jusqu'à 30 % en poids d'un ester pyrophosphate de dialkyle de formule

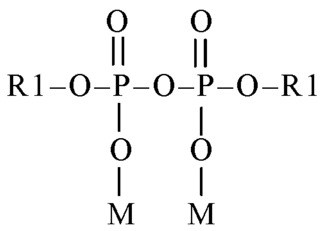

dans laquelle R1 et M ont les mêmes significations que dans la revendication 1.

9. Renfort textile conforme à l'une des revendications précédentes, dans lequel l'apprêt comprend en outre jusqu'à 20 % en poids d'un ester phosphate de trialkyle de formule

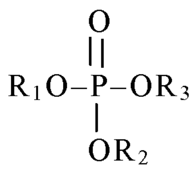

dans laquelle $R_1$, $R_2$ et $R_3$ représentent indépendamment des groupes alkyle en $C_1$-$C_{15}$ à chaîne linéaire ou ramifiée.

10. Renfort textile conforme à l'une des revendications précédentes, dans lequel l'aramide est un poly(p-phénylène-téréphtalamide), ou un poly(p-phénylène-téréphtalamide) comportant des motifs de type 3,4'-diamino-diphényl-éther ou (5 ou 6)-amino-2-(p-amino-phényl)-benzimidazole.

11. Tuyau, tube ou tuyau flexible comportant un renfort textile conforme à l'une des revendications 1 à 10.

12. Câble de fibres optiques comportant un renfort textile conforme à l'une des revendications 1 à 10.

13. Câble de transport d'énergie comportant un renfort textile conforme à l'une des revendications 1 à 10.

14. Matériau composite ou plastique renforcé par fibres, comportant un renfort textile conforme à l'une des revendications 1 à 10.

15. Article à résistance balistique, comportant un renfort textile conforme à l'une des revendications 1 à 10.

Fig. 1

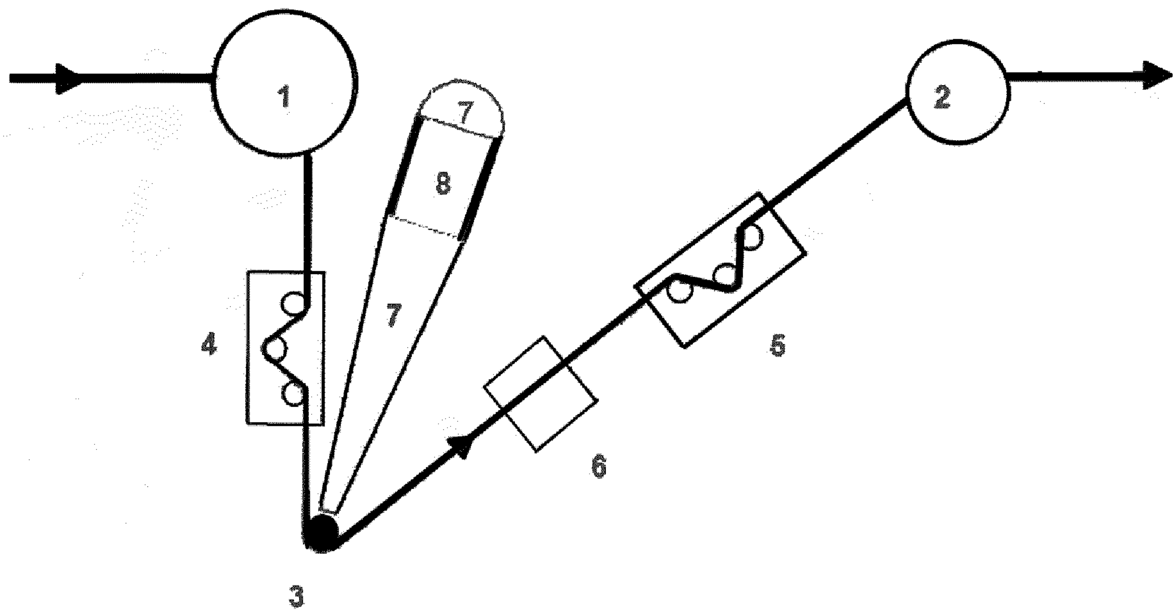

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5478648 A
- US 8031996 B
- JP 10212664 B
- US 2002153504 A
- EP 1808526 A


### Non-patent literature cited in the description


- Textile Terms and Definitions. 88
- *Research Disclosure,* 01 July 1982, vol. 219 (1